# FASCICULE DE BREVET EUROPEEN

(11) **EP 0 978 745 B1**
(45) Date de publication et mention de la délivrance du brevet: **31.10.2007**
(21) Numéro de dépôt: 99420158.0
(22) Date de dépôt: 12.07.1999
(51) Int. Cl.: G02B 6/44, H02G 15/007

(54) **Dispositif d'entrée de câble à fibres optiques**
Eingangsstück für ein Faseroptischkabel
Entry piece for an optical cable

(30) Priorité: 04.08.1998 FR 9810172
(43) Date de publication de la demande: 09.02.2000
(73) Titulaire: POUYET S.A., 94207 Ivry sur Seine (FR)
(72) Inventeur: Naudin, Thierry, 44700 Orvault (FR); Corbille, Christophe, 44460 Saint Nicolas de Redon (FR); Brunet, Hervé, 44600 Saint Nazaire (FR); Salaun, Jacques, 92140 Clamart (FR)
(74) Mandataire: Vuillermoz, Bruno

(56) Documents cités:
- EP-A- 0 589 618
- WO-A-94/24598
- WO-A-95/06891
- US-A- 5 598 500
- US-A- 5 689 607
- PATENT ABSTRACTS OF JAPAN vol. 011, no. 121 (P-568), 16 avril 1987 (1987-04-16) & JP 61 267007 A (SEIKO GIKEN:KK), 26 novembre 1986 (1986-11-26)

## Description

La présente invention se rapporte à un dispositif d'entrée étanche d'un câble à fibres optiques dans une chambre ou dans un contenant, par exemple dans une boîte de raccordement contenant un organisateur optique et destinée à être placée en extérieur ou dans une cuve enterrée.

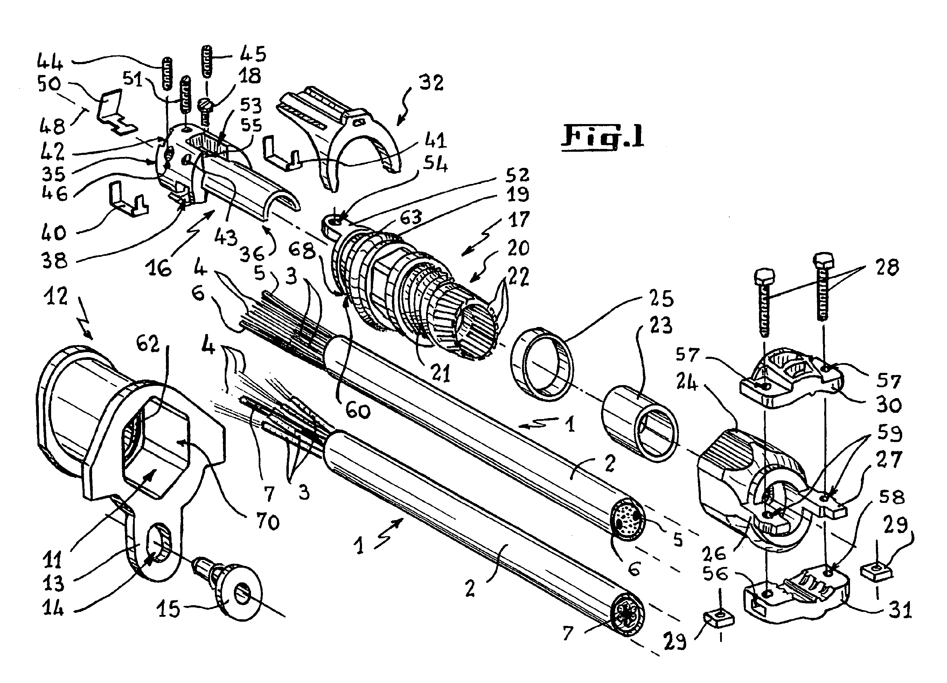

Sur la figure 1 jointe, qui sera décrite plus en détails ultérieurement, on a désigné par la référence 1 un câble optique de type connu.

Ce câble 1 comporte une solide gaine extérieure semi-rigide 2 qui protège un ensemble de petits tubes souples 3 qui contiennent chacun quelques fibres optiques 4 elles-mêmes souvent noyées dans une graisse de protection et d'étanchéité.

En outre sont prévus, dans la gaine 2, deux mèches de renfort semi-rigides 5, 6, en fibres d'Aramide par exemple, qui sont appelées «renforts périphériques » parce qu'elles sont positionnées plutôt à proximité de la gaine 2, de part et d'autre de l'axe longitudinal médian du câble optique 1.

A l'extrémité libre du câble 1, on a dénudé le câble, c'est-à-dire enlevé la gaine 2, les petits tubes de protection, et la graisse d'étanchéité.

La solide gaine extérieure 2, les mèches de renfort 5, 6, les petits tubes 3, et la graisse d'enrobage des fibres 4, sont des protections mécaniques des fibres optiques 4 qui sont rendues nécessaires du fait que les fibres optiques ne peuvent supporter aucune contrainte mécanique.

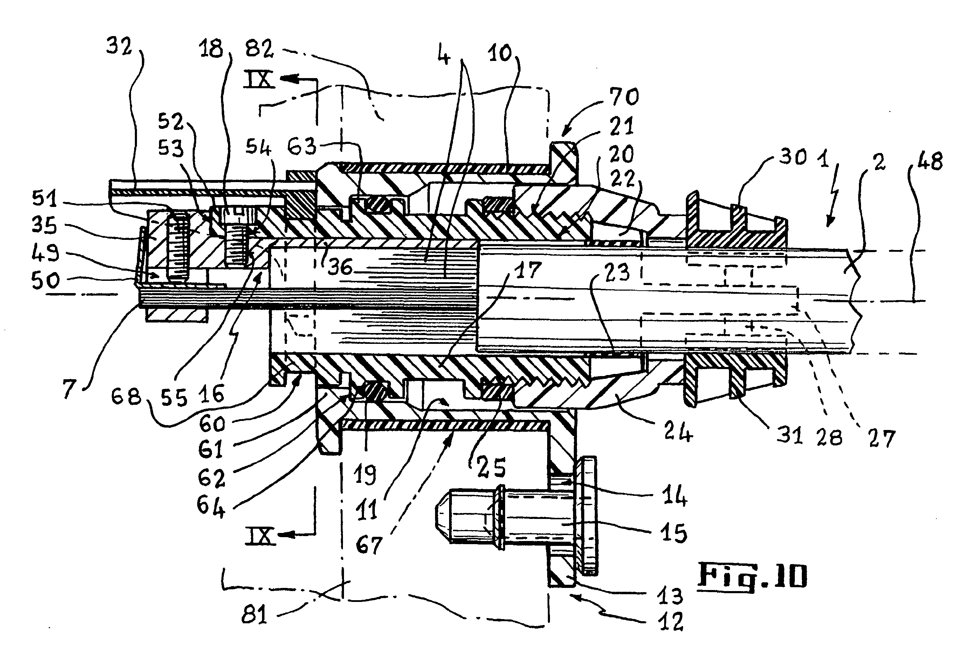

Au lieu d'utiliser, pour assurer la tenue mécanique du câble optique 1, des mèches de renfort semi-rigides et latérales 6, 5, il est aussi possible d'utiliser, comme on l'a schématisé à titre illustratif sur cette figure 1 ainsi que sur la figure 10 jointe, un renfort semi-rigide axial et central 7, et des mèches de renfort latérales souples (non représentées), tout ceci étant bien connu de l'Homme de l'Art.

A noter qu'en langage du métier, la mèche semi-rigide axiale et centrale 7 est appelée « porteur central », et que le câble dénudé comme en figure 1 est dit « préparé ».

Compte tenu de la fragilité mécanique des fibres optiques, il est nécessaire de prévoir, pour une entrée étanche de câble optique dans une chambre ou dans un contenant, non seulement des moyens d'étanchéité, mais encore de solides moyens d'amarrage de la gaine extérieure 2 du câble ainsi que de ses mèches de renfort telles que les renforts périphériques 5, 6 ou le porteur central 7 et ses mèches périphériques souples associées.

Actuellement, la société demanderesse commercialise une semelle d'amarrage métallique longiligne qui se présente sous la forme d'une barrette métallique rigide comportant, à son extrémité aval, un étrier d'amarrage du porteur central éventuel, et à son extrémité amont un couple d'encoches de réception d'un collier de serrage, contre cette barrette, de la gaine extérieure du câble optique, suivies vers l'aval de deux couples d'encoches de réception de deux colliers d'amarrage des renforts périphériques.

Une fois le câble optique préparé, puis mis en place et serré sur cette semelle d'amarrage, on enfile l'ensemble dans le contenant, et l'on vient fixer par vissage la semelle d'amarrage en un endroit prévu à cet effet dans le contenant. Ensuite de quoi, on réalise l'étanchéité d'entrée du câble soit en utilisant un manchon thermo-rétractable, soit en coulant une résine d'étanchéité, soit (dans d'autres dispositifs connus et analogues) en utilisant un classique dispositif d'étanchéité par presse-étoupe.

Ces dispositifs d'entrée de câble connus présentent les inconvénients d'être assez encombrants dans le sens longitudinal et d'être peu commodes à utiliser du fait qu'il faut intervenir positivement dans le contenant pour y fixer la semelle d'amarrage par vissage, alors que l'accessibilité y est souvent difficile. En outre, l'étanchéité d'entrée du câble se trouve positionnée avant l'endroit où est effectué l'amarrage de la gaine extérieure, de sorte que les sollicitations extérieures du câble sont en premier lieu appliquées au dispositif d'étanchéité (manchon thermo-rétractable, résine d'étanchéité, presse-étoupe, ...), et seulement en deuxième lieu appliquées au dispositif d'amarrage de la gaine. Il en résulte une fiabilité assez limitée pour ce dispositif d'entrée de câble, car le dispositif d'étanchéité n'est pas toujours conçu pour pouvoir résister très longtemps aux sollicitations extérieures.

Le document US- 5.598.500 décrit un dispositif de fixation et d'étanchéité pour un câble à fibres optiques. Le dispositif comporte un organe d'immobilisation par serrage de la gaine du câble par l'extérieur de celle-ci, au moins un bouchon creux, apte à coiffer une mèche de renfort du câble, et comportant une collerette en appui contre une surface plane ménagée à l'extrémité de la gaine, et un ensemble de blocage en prise sur le bouchon, formé de deux mâchoires opposées. Des moyens sont prévus pour rapprocher l'ensemble de blocage en prise sur le bouchon par rapport à l'organe d'immobilisation de la gaine, afin d'écraser localement celle-ci par la collerette du bouchon, en réalisant l'étanchéité vis-à-vis de l'extérieur de la mèche de renfort s'étendant dans l'épaisseur de la gaine, parallèlement à son axe longitudinal.

L'invention vise à remédier à ces inconvénients.

Elle se rapporte à cet effet à un dispositif d'entrée étanche d'un câble, présentant des fibres optiques et au moins une mèche de renfort, dans une chambre et à travers un passage d'entrée prévu à cet effet, comme défini dans la revendication 1.

L'invention se rapporte en particulier à un dispositif tel que ci-dessus défini, comportant:
- à l'avant : une semelle d'amarrage rigide comprenant des orifices ou fentes d'introduction des mèches de renfort, latérales et/ou centrales, du câble, ces orifices ou fentes coopérant chacun avec un organe de serrage, agissant typiquement par rotation d'une vis, de la ou des mèches qu'il reçoit,
- à l'arrière : un écrou de serrage de presse-étoupe qui est en outre conformé pour recevoir l'organe de bridage de la gaine extérieure du câble optique,
- entre l'avant et l'arrière : le corps tubulaire d'étanchéité dont la partie avant s'encastre de manière télescopique dans ladite semelle d'amarrage, des moyens de solidarisation de ce corps d'étanchéité et de cette semelle d'amarrage en position encastrée étant prévus, la partie arrière de ce corps tubulaire formant, en association avec une bague d'étanchéité, le presse-étoupe d'étanchéité complémentaire dudit écrou de serrage, ce presse-étoupe venant réaliser l'étanchéité par serrage sur la gaine extérieure du câble, ce corps d'étanchéité recevant par ailleurs un moyen de réalisation de l'étanchéité par rapport au passage d'entrée dans la chambre ou contenant, et comportant par ailleurs un organe de butée qui est destiné à limiter, par coopération avec une forme complémentaire dudit passage d'entrée, l'introduction du dispositif par sa partie avant à travers ce passage d'entrée, la position de butée étant alors telle que la tête du dispositif émerge à l'intérieur de cette chambre ou contenant, un moyen de clavetage étant à ce stade prévu pour verrouiller le dispositif en cette position.

Avantageusement, ledit écrou de serrage a une forme externe, par exemple carrée ou hexagonale, comportant plusieurs pans, tandis que la partie arrière dudit orifice de passage a la forme femelle conjuguée.

Avantageusement aussi, ledit moyen de clavetage est constitué par une fourchette de bridage semi-rigide qui vient s'enficher, en l'emprisonnant partiellement, dans une gorge annulaire externe du dispositif d'entrée de câble, cette gorge émergeant en conséquence vers l'aval par rapport audit passage d'entrée lorsque le dispositif y est introduit jusqu'en sa position de butée.

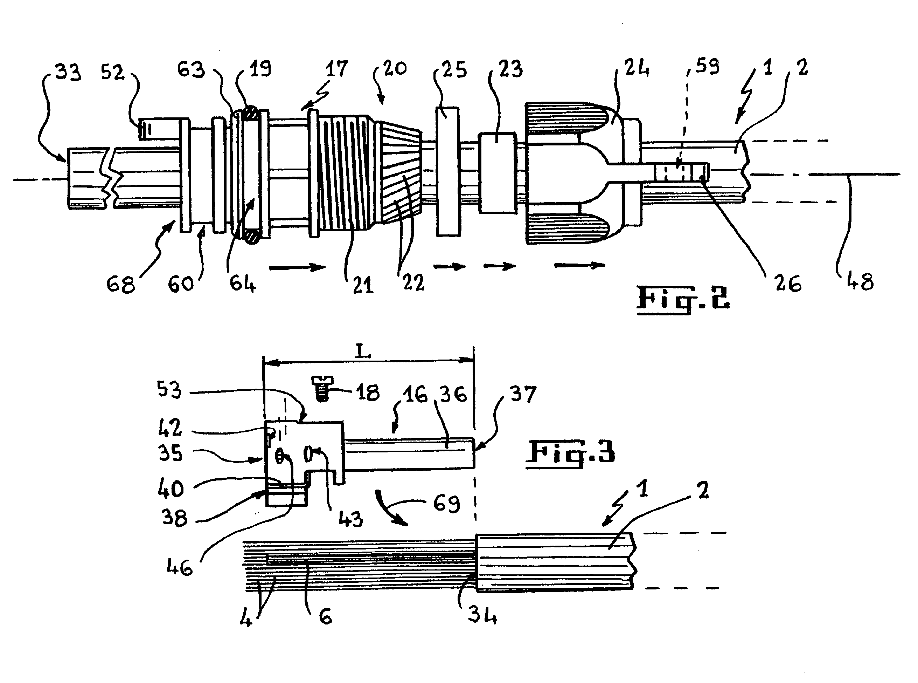

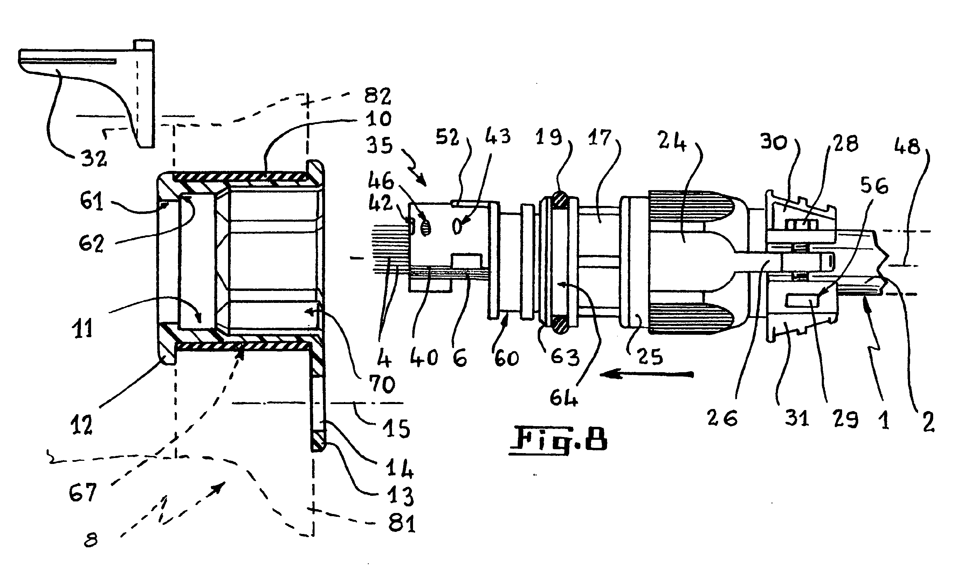

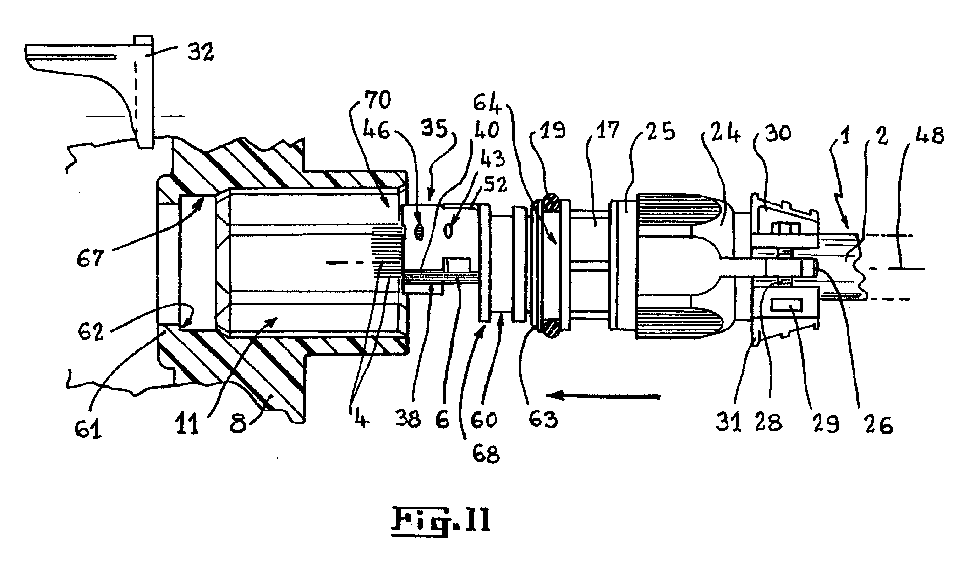

De toute façon, l'invention sera bien comprise, et ses différents avantages et caractéristiques ressortiront mieux, lors de la description suivante d'un exemple non limitatif de réalisation, en référence au dessin schématique annexé dans lequel :
■ Figure 1 est une perspective éclatée de ce dispositif d'entrée de câble
■ Figures 2 à 9, ainsi que leurs compléments 4A, 4B, 4C, et 9A qui est une coupe selon IX-IX de la figure 10, schématisent les phases successives de montage et mise en place de ce dispositif d'entrée de câble
■ Figure 10 est une coupe verticale, axiale et longitudinale, de ce dispositif monté et mis en place
■ Figure 11 est une vue semblable à Figure 8, et montrant une variante de réalisation.

On se réfère tout d'abord aux figures 1, 9A, et 10 qui montrent la constitution de ce dispositif d'entrée de câble optique.

Il est supposé ici qu'il s'agit d'une entrée de câble optique dans un boîtier de raccordement 8 composé d'un fond creux 81 et d'un couvercle 82 qui se ferment l'un sur l'autre avec interposition classique d'un joint périphérique d'étanchéité 10.

Le passage d'entrée 11 devant avoir une forme particulière, comme on le verra ci-après, et ce boîtier étant en revanche un boîtier standard, il est ici prévu une pièce d'adaptation 12 qui se place, avec interposition du joint 10 qui est localement annulaire à cet endroit, dans l'orifice d'entrée standard 67 du boîtier 8. Cette pièce 12 possède avantageusement une patte latérale 13 percée d'un orifice 14 de passage d'une vis 15, ou d'un pion de maintien ou autre dispositif, ce qui permet de la fixer en position sur le boîtier 8.

A la partie avant du dispositif, c'est-à-dire à l'extrémité la plus en aval par rapport au sens d'introduction du câble optique 1 dans le boîtier de raccordement 8, on trouve une semelle métallique d'amarrage 16.

Cette semelle d'amarrage 16 vient s'enficher, de manière télescopique comme on le voit sur le dessin et comme on l'expliquera plus en détails ci-après, dans un corps tubulaire d'étanchéité 17, en matière plastique, ces deux éléments 16 et 17 se solidarisant alors à l'aide d'une vis de verrouillage 18.

Ce corps d'étanchéité 17 reçoit un joint d'étanchéité torique externe 19, et si sa partie avant 68 est conformée pour recevoir la semelle d'amarrage 16, sa partie arrière 20 est conformée en presse-étoupe, avec un filetage 21 et des lamelles d'appui 22 qui coopèrent, classiquement en soi, avec un joint annulaire d'étanchéité 23 en rapport ajusté avec le diamètre du câble 1 et un écrou très spécial de serrage 24 de section externe hexagonale, pour venir se serrer sur la gaine extérieure 2 du câble 1.

Les câbles optiques pouvant être de différents diamètres, il est fourni, également en rapport ajusté avec le diamètre du câble 1 utilisé, un anneau rigide de compensation 25 qui s'enfile sur le filetage 21 et qui permet en conséquence de limiter à sa juste valeur le serrage de l'écrou 24, ce dernier venant buter sur l'anneau 25 en fin de course de serrage.

A sa partie arrière, l'écrou 24 possède par ailleurs deux pattes longitudinales et latérales 26, 27 qui reçoivent, par l'intermédiaire de deux vis 28 et de deux écrous associés 29, les deux moitiés 30, 31 d'un étrier de bridage mécanique du câble 1 par serrage de cet étrier sur la gaine extérieure 2 de ce câble.

Il est enfin prévu une clavette en forme de fourchette semi-rigide 32, qui est destinée au verrouillage du dispositif lorsque ce dernier est monté sur le câble 1 et finalement mis en place dans le boîtier 8.

Tous ces éléments du dispositif d'entrée de câble viennent d'être décrits rapidement. La description, qui va suivre, des phases successives de montage et mise en place de ce dispositif permettra de préciser les détails manquants.

En se référant à la figure 2, l'extrémité libre 33 du câble 1 étant sectionnée à la bonne longueur mais n'étant pas encore dénudée, on commence par enfiler successivement sur ce câble l'écrou de presse-étoupe très particulier 24, le joint annulaire 23 et l'anneau de compensation 25 si nécessaire, puis le corps d'étanchéité tubulaire 17 préalablement garni du joint torique 19.

La pièce 17 est réalisée en une matière plastique qui, tout en étant très rigide, garde toutefois une souplesse suffisante pour permettre aux lamelles de presse-étoupe 22 de venir serrer le joint annulaire 23 lorsque l'on visse l'écrou de presse-étoupe 24 (dont, comme on le voit sur la figure 10, la section interne est classiquement de forme tronconique) sur son filetage de réception 21. La matière plastique utilisée pour ceci est par exemple un Polyamide non chargé.

Puis, selon Figure 3, on procède à la « préparation » du câble 1. Pour ceci, on le dénude, à partir de l'endroit choisi 34 pour laisser libre la longueur de fibres optiques 4 souhaitée à l'intérieur de la boîte 8, de sa gaine extérieure 2 et de ses petits tubes de protection 3, et l'on dégraisse les fibres optiques 4 ainsi mises à nu. On sectionne par ailleurs les mèches de renfort 5, 6 de façon qu'elles ne dépassent du plan transversal de dénudage 34 que d'une longueur sensiblement égale à la longueur L de la semelle d'amarrage 16.

La semelle métallique 16 se compose (voir aussi la figure 1), d'un seul bloc, d'une tête 35 qui est destinée, comme on le verra ci-après, à réaliser l'amarrage des renforts périphériques, par exemple les renforts 5 et 6, ainsi que du porteur central 7 (figure 10) s'il existe, et d'une queue 36 en forme de demi-cylindre à section semi-circulaire. Cette queue 36 viendra, comme décrit ci-après, s'enficher étroitement dans l'orifice tubulaire formé à la moitié avant 68 du corps d'étanchéité 17.

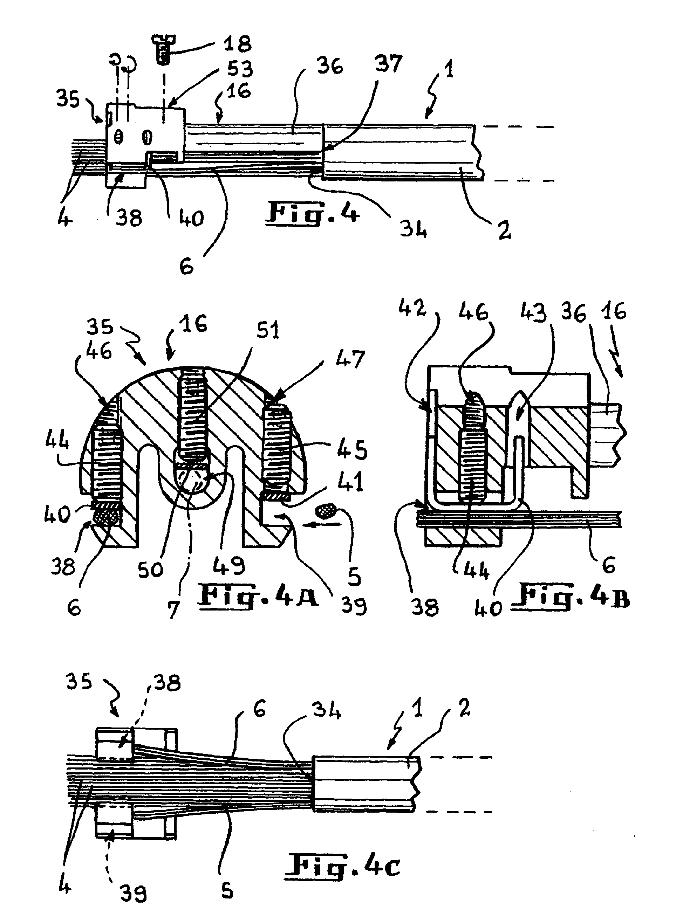

Comme indiqué par la flèche 69 sur la figure 3 et comme on le voit sur la figure 4, on positionne alors la semelle d'amarrage 16 de manière contiguë à l'extrémité non dénudée du câble 1, c'est-à-dire de sorte que le plan transversal de dénudage 34 et le plan transversal 37 de l'extrémité arrière de la queue 36 soient sensiblement confondus en un seul et même plan transversal, vertical sur le dessin.

On procède alors, selon les figures 4 à 4C, à l'amarrage des deux renforts périphériques 5 et 6 du câble dans la tête 35 de la semelle d'amarrage 16.

Pour permettre un tel amarrage, cette tête 35 est pourvue (voir en particulier les figures 1, 4A à 4C) de deux encoches latérales 38, 39 d'introduction latérale des renforts périphériques 6 et 5.

Dans chacune de ces encoches 38, 39 est placé un étrier métallique en « U », respectivement 40 et 41, qui est monté coulissant du haut vers le bas, le long d'une saignée verticale de guidage 42 et d'un orifice vertical de guidage 43. En vissant chacune des deux vis verticales respectives 44 et 45 dans leurs orifices taraudés verticaux respectifs 46 et 47, on fait progressivement descendre les étriers 40 et 41 qui viennent alors presser fortement, sans les blesser, chacun des deux renforts périphériques 6 et 5 préalablement introduits dans les encoches respectives 38 et 39.

A noter que la tête 35 est aussi conformée pour amarrer le porteur central éventuel 7 (figure 10). Pour ceci, la tête 35 est percée, selon l'axe longitudinal médian 48 du dispositif, d'un orifice axial 49, à section oblongue dans le sens vertical, qui reçoit et maintient un autre étrier métallique d'amarrage 50 (figures 1 et 10). L'amarrage du porteur central 7 s'effectue, comme précédemment, en coinçant ce porteur central entre l'étrier 50 et la paroi du trou oblong 49 dans lequel le porteur central 7 a été préalablement introduit, ce qui est actionné là aussi par une vis verticale de serrage 51.

La présence des étriers 40, 41, 50 n'est pas obligatoire, et l'on pourrait se contenter, comme cela se fait pour des fils de cuivre, de bloquer les mèches de renfort 5, 6, et 7 à l'aide des vis correspondantes 44, 45, et 51. Ces étriers sont cependant ici très utiles car ils permettent d'amarrer solidement ces renforts 5, 6, 7 sans les blesser de manière dommageable pour la fiabilité de l'amarrage.

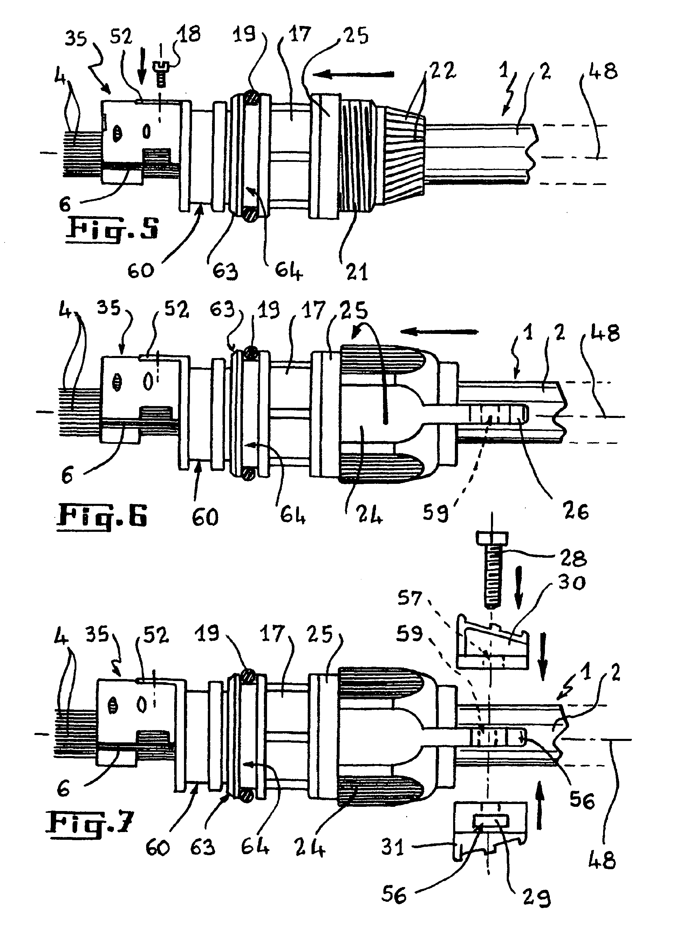

Cet amarrage des mèches de renfort 6, 5 étant ainsi effectué, on saisit le corps d'étanchéité tubulaire 17, et, selon Figure 5, on l'enfiche à fond sur la queue 36 de la semelle d'amarrage 16.

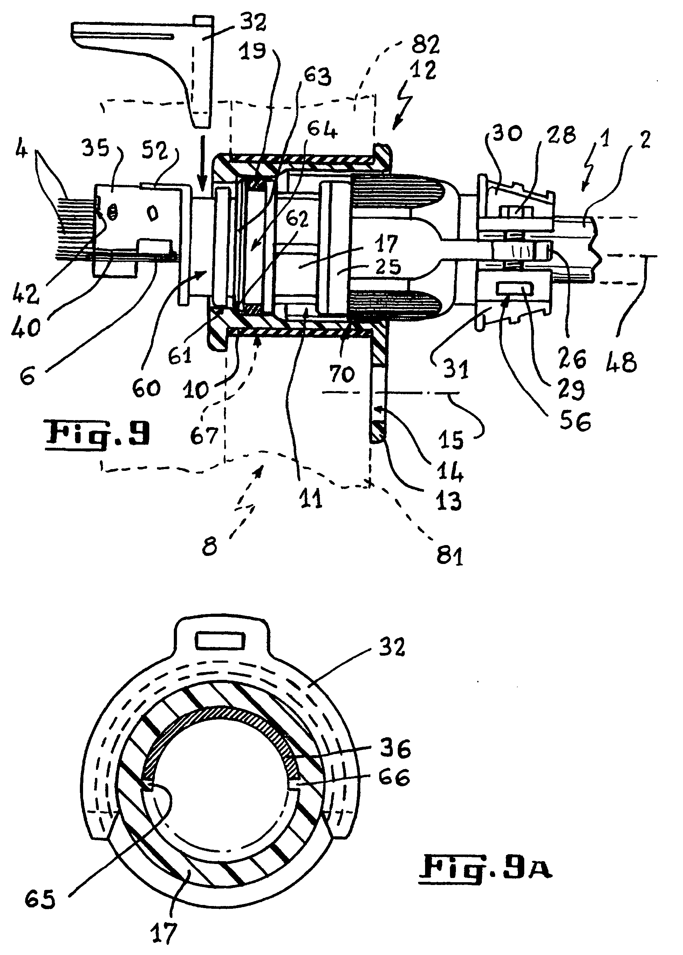

Pour optimiser et guider cette opération, le pourtour avant du corps d'étanchéité 17 est muni (figure 1) d'une proéminence longitudinale 52 qui vient s'enficher dans une encoche femelle longitudinale et conjuguée 53 de la tête 35 de la semelle métallique d'amarrage 16. En outre, deux nervures latérales 65, 66 (figure 9A) de la paroi interne cylindrique du corps 17 participent au guidage du corps 17 lorsqu'il coulisse sur la queue 36 de la semelle métallique 16.

On solidarise ensuite la semelle 16 et le corps 17 au moyen de la vis 18 qui passe à travers un orifice vertical 54 de la proéminence 52 et vient se visser dans un taraudage vertical 55 de la tête 35 (figures 1 et 10), ce taraudage 55 et cet orifice 54 étant alors coaxiaux.

Après s'être assuré que le joint d'étanchéité annulaire 23 et la rondelle de compensation 25 sont bien en place, on visse alors, selon Figure 6, l'écrou spécial 24 du presse-étoupe. L'étanchéité sur la gaine extérieure 2 du câble 1 est, comme mentionné précédemment, assurée lorsque l'écrou 24 est vissé jusqu'à arriver en butée contre la rondelle de compensation 25.

A noter que la forme externe hexagonale, à donc six pans, de l'écrou 24 permet, si on le souhaite, de le visser à l'aide d'une clé.

C'est alors (figures 7 et 8) que l'on réalise, à l'aide de l'étrier en deux moitiés 30, 31, des deux écrous 29 et des deux vis de serrage associés 28, le bridage du câble 1 sur les deux pattes arrière 26, 27 prévues spécialement à cet effet sur l'écrou spécial 24 du presse-étoupe.

Pour ceci, on introduit latéralement les deux écrous carrés 29 dans leurs cavités réceptrices respectives 56 de la moitié d'étrier inférieure 31, on met en place les deux moitiés d'étrier 30, 31 de façon que leurs orifices 57, 58 de passage des deux vis 28 coïncident avec des orifices 59, également de passage de ces deux vis, qui sont prévus sur chacune des pattes arrière 26, 27 de l'écrou de presse-étoupe 24. On introduit alors et visse les deux vis de bridage 28 jusqu'à brider solidement ensemble l'écrou 24, l'étrier 30, 31 et le câble 1 par sa gaine extérieure 2.

A noter que l'étrier 30, 31 est réalisé en une matière plastique très rigide, par exemple en Polyamide chargé en fibres de verre.

Le corps 17 et son écrou associé 24 sont par exemple en Polyamide chargé ou non, leur confèrant une très légère souplesse, indispensable au fonctionnement du presse-étoupe.

L'ensemble est alors ainsi, selon figure 8, entièrement préparé, amarré, et muni d'étanchéité, tout ceci étant avantageusement réalisé à l'extérieur de la boîte de raccordement 8.

L'opération suivante consiste, selon Figures 8 et 9, à introduire cet ensemble dans la boîte 8, par son passage d'entrée 11 prévu à cet effet, jusqu'à arriver en butée en une position (figure 9) où seules la tête 35 de la semelle métallique 16 et une gorge avant 60 du corps 17 dépassent du passage d'entrée 11 vers l'intérieur de la boîte 8, l'étanchéité d'entrée dans ce passage 11 étant réalisée par le joint torique précité 19.

Pour ceci, le passage d'entrée 11 a une forme particulière, conjuguée à cet effet de celle conférée au corps 17, cette forme particulière lui étant, dans cet exemple de réalisation et donc de façon nullement limitative en soi, conférée par celle de la pièce d'adaptation précitée 12.

Comme on le voit sur le dessin (voir en particulier la figure 8), le passage d'entrée 11, c'est-à-dire ici la paroi interne de la pièce d'adaptation 12, présente à son extrémité avant un rétrécissement de section de sortie 61 qui, tout en autorisant le passage aisé de la tête 35 et de la gorge 60, définit un épaulement circulaire 62 qui, en coopération avec un épaulement annulaire conjugué 63 du corps 17, positionné un peu en amont de la gorge 60 comme représenté sur le dessin, sert de butée de fin de course lorsque l'on introduit l'ensemble dans l'orifice 11.

Le joint torique 19 est positionné dans une gorge annulaire 64 du corps 17, située ici juste avant l'épaulement de butée 63, et, en position de butée selon la figure 9, ce joint 19 est pressé entre cette gorge 64 et la paroi interne du passage 11, donc de la pièce 12, dont la section est, à cet endroit, ajustée en conséquence.

La moitié arrière 70 du passage d'entrée 11, c'est-à-dire la surface interne arrière de la pièce d'adaptation 12, a très avantageusement une forme hexagonale qui est la forme femelle conjuguée de la surface externe hexagonale de l'écrou de presse-étoupe 24. En position de butée selon la figure 9, l'écrou 24 est au moins partiellement introduit dans cette entrée hexagonale 70 du passage 11, ce qui le bloque en rotation, de sorte que ce dispositif d'entrée de câble va résister alors efficacement aux sollicitations extérieures de torsion qui peuvent éventuellement s'exercer ultérieurement sur le câble 1.

Il ne reste plus, selon Figures 9, 9A, et 10, qu'à mettre en place, par enclipsage dans la gorge 60, la fourchette, ou clavette, de verrouillage précitée 32. L'entrée de câble est alors totalement mise en place, bridée, verrouillée, et étanche, sans qu'il n'y ait plus, comme autrefois, à intervenir dans la boîte pour y réaliser par exemple un vissage souvent difficile à faire, et sans que l'étanchéité sur la gaine extérieure du câble ne soit réalisée comme autrefois en amont du point d'amarrage de ce dernier, avec la fragilisation qui en découlait.

Le montage et la mise en place de ce dispositif est particulièrement simple et convivial, ce qui facilite grandement la tâche de l'utilisateur, et de surcroît son encombrement longitudinal à l'intérieur de la chambre ou du contenant est notablement réduit.

Comme il va de soi, l'invention n'est pas limitée à l'exemple de la réalisation qui vient d'être décrit. C'est ainsi par exemple que la pièce d'adaptation 12 pourrait être omise et tout simplement remplacée par une forme correspondante de la surface interne du passage d'entrée 11, alors réalisée d'une seule pièce, typiquement de moulage, avec la boîte 8, comme schématisé sur la figure 11.

## Revendications

1. Dispositif d'entrée étanche d'un câble (1), présentant des fibres optiques (4) et au moins une mèche de renfort (5, 6, 7), dans une chambre (8) et à travers un passage d'entrée (11) prévu à cet effet, comprenant :
- un corps tubulaire d'étanchéité (17) supportant des moyens d'étanchéité (19, 21, 22, 23, 24, 25) qui sont situés autour du corps d'étanchéité (17),
- un organe de bridage (30, 31) pour l'amarrage de la gaine extérieure (2) du câble,
- un élément d'amarrage (16) situé en aval des moyens d'étanchéité (19, 21, 22, 23, 24, 25) par rapport à la direction d'insertion dans le passage d'entrée (11) et arrangé de manière à pouvoir monter et amarrer la ou les mèches de renfort (5, 6, 7) préalablement sur le câble (1), avant que ce dernier ne soit introduit dans la chambre (8),
- où l'un des moyens d'étanchéité (24) est conformé pour recevoir l'organe de bridage (30, 31) directement sur le corps d'étanchéité (17) en amont des autres moyens d'étanchéité (19, 21, 22, 23, 25) par rapport à la direction d'insertion dans le passage d'entrée (11), et
- comprenant un moyen de clavetage (32) permettant de verrouiller ledit dispositif d'entrée étanche lorsqu'il est reçu par enfichage dans ladite chambre (8).

2. Dispositif selon la revendication 1, **caractérisé en ce qu'**il comporte :
- à l'avant : une semelle d'amarrage rigide (16) comprenant des orifices (49) ou fentes (38, 39) d'introduction des mèches de renfort, centrales (7) et/ou latérales (5, 6) du câble, ces orifices ou fentes (38, 39, 49) coopérant chacun avec un organe de serrage (40, 41, 50), agissant typiquement par rotation d'une vis (44,45, 51), de la ou des mèches (5, 6, 7) qu'il reçoit,
- à l'arrière : un écrou (24) de serrage de presse-étoupe (20) qui est en outre conformé (26, 27) pour recevoir organe (30, 31) de bridage de la gaine extérieure (2) du câble optique (1),
- entre l'avant et l'arrière : le corps tubulaire d'étanchéité (17) dont la partie avant (68) s'encastre de manière télescopique dans la semelle d'amarrage (16), des moyens de solidarisation (18) de ce corps d'étanchéité (17) et de ladite semelle d'amarrage (16) en position encastrée étant prévus, la partie arrière (20) de ce corps tubulaire (17) formant, en association avec une bague d'étanchéité (23), le presse-étoupe d'étanchéité (21, 22) complémentaire dudit écrou de serrage (24), ce presse-étoupe venant réaliser l'étanchéité par serrage sur la gaine extérieure (2) du câble,
ce corps d'étanchéité recevant par ailleurs un moyen de réalisation de l'étanchéité (19) par rapport au passage d'entrée (11) dans la chambre (8), et comportant par ailleurs un organe de butée (63) qui est destiné à limiter, par coopération avec une forme complémentaire (62) dudit passage d'entrée (11), l'introduction du dispositif (16, 17, 24) par sa partie avant à travers le passage d'entrée (11), la position de butée (62, 63) étant alors telle que la tête (35, 60) du dispositif émerge à l'intérieur de ladite chambre (8), le moyen de clavetage (32) étant à ce stade prévu pour verrouiller le dispositif en cette position.

3. Dispositif selon la revendication 2, **caractérisé en ce que** ledit écrou de serrage (24) a une forme externe comportant plusieurs pans, tandis que la partie arrière (70) dudit orifice de passage (11) a la forme femelle conjuguée.

4. Dispositif selon l'une quelconque des revendications précédentes, **caractérisé en ce que** le moyen de clavetage est constitué par une fourchette de bridage semi-rigide (32) qui vient s'enficher, en l'emprisonnant partiellement, dans une gorge annulaire externe (60) du dispositif d'entrée de câble, la gorge (60) émergeant en conséquence vers l'aval par rapport audit passage d'entrée (11) lorsque le dispositif y est introduit jusqu'en sa position de butée.

5. Dispositif selon la revendication 2 ou 3, **caractérisé en ce que** ledit écrou de presse-étoupe (24) comporte deux pattes arrière (26, 27) qui sont conçues pour recevoir l'organe de bridage (31, 32) sur la gaine extérieure (2) du câble optique (1).

6. Dispositif selon la revendication 5, **caractérisé en ce que** l'organe de bridage est réalisé sous la forme d'un étrier en deux moitiés (31, 32).

7. Dispositif selon l'une quelconque des revendications 2 à 6, **caractérisé en ce que** le corps d'étanchéité (17) reçoit une bague rigide de compensation (25), qui est ajustée, en fonction du diamètre du câble optique (1), pour limiter à sa juste valeur le serrage dudit écrou de presse-étoupe (24).

8. Dispositif selon l'une quelconque des revendications précédentes, **caractérisé en ce que** la surface externe du corps d'étanchéité (17) avec l'un des moyens d'étanchéité (24) comprend une forme qui est la forme conjuguée de la surface interne arrière (70) du passage d'entrée (11), de façon à bloquer en rotation le dispositif lorsqu'il est reçu dans le passage d'entrée (11).

## Claims

1. A watertight inlet device for inserting a cable (1) containing optical fibers (4) and at least one strength member (5, 6, 7) into a chamber (8) via an inlet passageway (11) provided for this purpose, comprising :
■ a sealing tubular body (17) supporting sealing means (19, 21, 22, 23, 24, 25) positioned around said sealing body (17) ;
■ a retaining member (30, 31) for clamping on the outer sheath (2) of the cable ;
■ a securing means (16) positioned downstream of the sealing means (19, 21, 22, 23, 24, 25) relative to the insertion direction in the inlet passageway (11) and arranged for first mounting and securing the strength member (5, 6, 7) on the cable (1), before the later is inserted into the chamber (8) ;
where one of the sealing means (24) is conformed for receiving the retaining member (30, 31) directly on the sealing body (17) upstream of the other sealing means (19, 21, 22, 23, 25) relative to the insertion direction in the inlet passageway (11), and comprising a keying means (32) for locking said watertight inlet device when the later is received by plugging in said chamber (8).

2. The device of claim 1, **characterized in that** it comprises :
■ at the front: a rigid securing solepiece (16) provided with orifices (49) or slots (38, 39) into which central strength members (7) and/or side strength members (5, 6) of the cable are inserted, each of these orifices or slots (38, 39, 49) co-operating with a clamping member (40, 41, 50) typically acting by a screw (44, 45, 51) being rotated to clamp the strength member(s) (5, 6, 7) that it receives;
■ at the rear: a nut (24) for clamping a stuffing box (20), which nut is also shaped (26, 27) to receive the retaining member (30, 31) of the outer sheath (2) of the optical cable (1); and
■ between the front and the rear: the sealing tubular body (17) whose front portion (68) engages telescopically into said securing solepiece (16), securing means (18) being provided for fixing the sealing body (17) to the securing solepiece (16) in the engaged position, the rear portion (20) of the tubular body (17) co-operating with a sealing ring (23) to form the sealing stuffing box (21, 22) that is complementary to said clamping nut (24), the stuffing box achieving the sealing by clamping on the outer sheath (2) of the cable;
the sealing body also receiving means for providing the sealing (19) relative to the inlet passageway (11) in the chamber (8), and further including an abutment member (63) which is designed to co-operate with a complementary shape (62) of said inlet passageway (11) to limit the insertion of the device (16, 17, 24) by its anterior portion through said inlet passageway (11), the abutment position (62, 63) then being such that the head (62, 63) of the device emerges inside the chamber (8), keying means (32) then being provided for locking the device in this position.

3. The Device according to claim 2, **characterized in that** wherein said clamping nut (24) has an outside shape comprising a plurality of facets, while the rear portion (70) of said passageway (11) orifice is of the corresponding female shape.

4. The device according to any of the preceding claims, wherein said keying means is constituted by a semi-rigid retaining fork (32) which plugs into an outer annular groove (60) in the cable inlet device, thereby holding it captive in part, the groove (60) therefore emerging downstream relative to said inlet passageway (11) when the device is inserted to its abutment position.

5. The device according to claim 2 or 3, wherein said stuffing-box nut (24) is provided with two rear tabs (26, 27) which are designed to receive the retaining member (31, 32) for retaining the outer sheath (2) of the optical cable (1).

6. The device according to claim 5, wherein the retaining member is implemented in the form of a clamp in two halves (31, 32).

7. The device according to any one of claims 2 to 6, wherein the sealing body (17) receives a rigid compensation ring (25), which is matched, as a function of the diameter of the optical cable (1) to limit the clamping of said stuffing-box nut (24) to its correct value.

8. The device according to any one of the preceding claims, wherein the external surface of the sealing body (17) with one of the sealing means (24) is of the conjugated form of internal rear surface (70) of the inlet passageway (11), thereby preventing the device from rotating when received in the inlet passageway (11).

## Patentansprüche

1. Vorrichtung für den dichten Eintritt eines optische Fasern (4) und mindestens eine Verstärkungsschnur (5, 6, 7) aufweisenden Kabels (1) in eine Kammer (8) und durch einen zu diesem Zweck vorgesehenen Eintrittsdurchlass (11), mit:
- einem rohrförmigen Dichtkörper (17), der Dichteinrichtungen (19, 21, 22, 23, 24, 25) trägt, welche um den Dichtkörper (17) herum angeordnet sind,
- einem Spannelement (30, 31) zum Befestigen des äußeren Mantels (2) des Kabels,
- einem Befestigungselement (16), das in bezug auf die Einführrichtung in den Eintrittsdurchlass (11) stromabwärts der Dichteinrichtungen (19, 21, 22, 23, 24, 25) angeordnet und derart ausgebildet ist, dass die Verstärkungsschnur oder -schnüre (5, 6, 7) des Kabels (1) an diesem angebracht und befestigt werden können, bevor dieses in die Kammer (8) eingeführt wird,
- wobei eine der Dichteinrichtungen (24) zum Aufnehmen des Spannelements (30, 31) unmittelbar auf dem Dichtkörper (17) in bezug auf die Einführrichtung in den Eintrittsdurchlass (11) stromaufwärts der anderen Dichteinrichtungen (19, 21, 22, 23, 25) ausgebildet ist, und
- einer Keilverbindungseinrichtung (32), welche das Verriegeln der Vorrichtung für den dichten Eintritt ermöglicht, wenn diese durch Einsetzen in der Kammer (8) aufgenommen ist.

2. Vorrichtung nach Anspruch 1, **dadurch gekennzeichnet, dass** sie umfasst:
- im vorderen Bereich: eine starre Befestigungsklemme (16) mit Öffnungen (49) oder Schlitzen (38, 39) zum Einführen der mittleren (7) und/oder seitlichen (5, 6) Verstärkungsschnüre des Kabels, wobei die Öffnungen oder Schlitze (38, 39, 49) jeweils mit einem üblicherweise durch Drehen einer Schraube (44. 45, 51) wirkenden Klemmelement (40, 41, 50) für die Schnur oder die Schnüre (5, 6, 7), welche es aufnimmt, zusammenwirken,
- im hinteren Bereich: eine Mutter (24) zum Klemmen der Stopfbuchse (20), die ferner zum Aufnehmen des Elements (30, 31) zum Spannen des äußeren Mantels (2) des optischen Kabels (1) ausgebildet ist (26, 27),
- zwischen dem vorderen und dem hinteren Bereich: den rohrförmigen Dichtkörper (17), dessen vorderer Teil (68) teleskopartig in die Befestigungsklemme (16) eingespannt ist, wobei Einrichtungen (18) zum Verbinden des Dichtkörpers (17) und der Befestigungsklemme (16) in der eingespannten Position vorgesehen sind, und wobei der hintere Teil (20) des rohrförmigen Körpers (17) zusammen mit einem Dichtring (23) die zu der Klemmmutter (24) komplementäre Dichtungsstopfbuchse (21, 22) bildet, welche die Abdichtung durch Klemmung auf den äußeren Mantel (2) des Kabels bewirkt,
wobei der Dichtkörper ferner eine Einrichtung (19) zur Abdichtung in bezug auf den Eintrittsdurchlass (11) in die Kammer (8) umfasst, und ferner ein Anschlagelement (63) aufweist, das durch Zusammenwirken mit einer komplementären Ausgestaltung (62) des Eintrittsdurchlasses (11) das Einführen des vorderen Teils der Vorrichtung (16, 17, 24) durch den Eintrittsdurchlass (11) begrenzt, wobei der Anschlag (62, 63) derart positioniert ist, dass der Kopf (35, 60) der Vorrichtung in das Innere der Kammer (8) ragt, wobei zu diesem Zeitpunkt die Keilverbindungseinrichtung (32) vorgesehen wird, um die Vorrichtung in dieser Position zu verriegeln.

3. Vorrichtung nach Anspruch 2, **dadurch gekennzeichnet, dass** die Klemmmutter (24) eine äußere Form mit mehreren Flächen aufweist, während der hintere Teil (70) der Durchlassöffnung (11) die entsprechende weibliche Form aufweist.

4. Vorrichtung nach einem der vorhergehenden Ansprüche, **dadurch gekennzeichnet, dass** die Keilverbindungseinrichtung durch eine halbstarre Spanngabel (32) gebildet ist, die in eine äußere Ringnut (60) der Kabeleingangsvorrichtung eingreift, so dass sie darin teilweise gefangen ist, wobei die Nut (60) infolgedessen in bezug auf den Eintrittsdurchlass (11) stromaufwärts austritt, wenn die Vorrichtung bis zu ihrer Anschlagposition in diesen eingesetzt ist.

5. Vorrichtung nach Anspruch 2 oder 3, **dadurch gekennzeichnet, dass** die Stopfbuchsenmutter (24) zwei hintere Laschen (26, 27) aufweist, die zum Aufnehmen des Spannelements (31, 32) auf dem äußeren Mantel (2) des optischen Kabels (1) ausgebildet sind.

6. Vorrichtung nach Anspruch 5, **dadurch gekennzeichnet, dass** das Spannelement als ein aus zwei Hälften (31, 32) bestehender Bügel ausgebildet ist.

7. Vorrichtung nach einem der Ansprüche 2 bis 6, **dadurch gekennzeichnet, dass** der Dichtkörper (17) einen starren Ausgleichsring (25) aufnimmt, der entsprechend dem Durchmesser des optischen Kabels (1) angepasst ist, um die Klemmung der Stopfbuchsenmutter (24) auf den richtigen Wert zu begrenzen.

8. Vorrichtung nach einem der vorhergehenden Ansprüche, **dadurch gekennzeichnet, dass** die Außenfläche des Dichtkörpers (17) mit einer der Dichteinrichtungen (24) eine Form bildet, welche die der hinteren Innenfläche (70) des Eintrittsdurchlasses (11) entsprechende Form ist, so dass die Vorrichtung gegen Drehen gesichert ist, wenn sie in dem Eintrittsdurchlass (11) aufgenommen ist.
